# EUROPEAN PATENT APPLICATION

(11) **EP 4 322 274 A1**
(43) Date of publication of application: **14.02.2024**
(21) Application number: 22878730.5
(22) Date of filing: 01.09.2022
(51) Int. Cl.: H01M 10/0565, H01M 10/058, H01M 50/572, H01M 50/586, H01M 10/052

(54) **SECONDARY BATTERY COMPRISING GEL POLYMER ELECTROLYTE AND METHOD FOR MANUFACTURING SAME**

(30) Priority: 06.10.2021 KR 20210132112
(71) Applicant: LG Energy Solution, Ltd., Seoul 07335 (KR)
(72) Inventor: LIM, Tae Seob, Daejeon 34122 (KR); RYU, Ji Hoon, Daejeon 34122 (KR); KIM, Dong Kyu, Daejeon 34122 (KR); YOON, Yeo Min, Daejeon 34122 (KR)
(74) Representative: Hoffmann Eitle
(86) International application number: PCT/KR2022/013110
(87) International publication number: WO 2023/058909

(57) **Abstract**

The present invention relates to a method of preparing a secondary battery which includes the steps of (S1) preparing a first gel polymer electrolyte composition including a first oligomer, and a second gel polymer electrolyte composition including a second oligomer; (S2) injecting the first gel polymer electrolyte composition into a battery case, in which an electrode assembly is accommodated, to impregnate inside of the electrode assembly with the first gel polymer electrolyte composition; (S3) injecting the second gel polymer electrolyte composition into the battery case; and (S4) curing the first gel polymer electrolyte composition and the second gel polymer electrolyte composition which have been injected into the battery case, wherein a content of the first oligomer in the first gel polymer electrolyte composition is less than a content of the second oligomer in the second gel polymer electrolyte composition.

## Description

### TECHNICAL FIELD

This application claims priority from Korean Patent Application No. 10-2021-0132112, filed on October 6, 2021, the disclosures of which are incorporated by reference herein.

The present invention relates to a secondary battery including a gel polymer electrolyte and a preparation method thereof.

### BACKGROUND ART

Demand for secondary batteries as an energy source has been significantly increased as technology development and demand with respect to electronic devices have increased, and, among these secondary batteries, lithium secondary batteries having high energy density and voltage have been commercialized and widely used.

Typically, an electrolyte in a liquid state, particularly, an ion conductive organic liquid electrolyte, in which a salt is dissolved in a non-aqueous organic solvent, has been mainly used as an electrolyte of a lithium secondary battery.

However, such an electrolyte in a liquid state has a disadvantage in that the organic solvent is not only highly likely to be volatilized, but also has low stability due to combustion caused by increases in ambient temperature and temperature of the battery itself.

Accordingly, research to commercialize a polymer electrolyte, such as a gel polymer electrolyte, instead of the electrolyte in a liquid state, has recently emerged.

Since the gel polymer electrolyte has better electrochemical stability than the liquid electrolyte, a thickness of the battery may not only be constantly maintained, but a thin film-type battery having excellent stability due to inherent adhesion of a gel phase may also be prepared.

After a polymerizable monomer or oligomer and a polymerization initiator are mixed in a liquid electrolyte solution, in which a salt is dissolved in a non-aqueous organic solvent, to prepare a composition, a battery using the gel polymer electrolyte is prepared by injecting the composition into the battery containing an electrode assembly, in which a positive electrode, a negative electrode, and a separator are wound or stacked, and gelling (crosslinking) the composition under appropriate temperature and time conditions.

Although a gel polymer electrolyte with an increased degree of cure is being studied to prevent the electrolyte from leaking to the outside even if the lithium secondary battery is damaged and to increase safety, there is a problem in that battery performance of the lithium secondary battery is degraded because interfacial resistance is increased and ionic conductivity is decreased when the degree of cure of the gel polymer electrolyte is increased.

Thus, there is a need to develop a secondary battery in which a gel polymer electrolyte having both improved stability and performance of the battery is used.

### DISCLOSURE OF THE INVENTION

### TECHNICAL PROBLEM

An aspect of the present invention provides a method of preparing a secondary battery in which a first gel polymer electrolyte composition and a second gel polymer electrolyte composition, which have different oligomer contents from each other, are used.

Another aspect of the present invention provides a secondary battery which may improve electrochemical performance of the secondary battery, may improve rigidity, and may prevent electrolyte leakage by disposing a first gel polymer electrolyte and a second gel polymer electrolyte, which have different interfacial resistances from each other, at specific positions of the secondary battery.

### TECHNICAL SOLUTION

According to an aspect of the present invention, there is provided a method of preparing a secondary battery which includes the steps of (S1) preparing a first gel polymer electrolyte composition including a first oligomer, and a second gel polymer electrolyte composition including a second oligomer, (S2) injecting the first gel polymer electrolyte composition into a battery case, in which an electrode assembly is accommodated, to impregnate inside of the electrode assembly with the first gel polymer electrolyte composition, (S3) injecting the second gel polymer electrolyte composition into the battery case, and (S4) curing the first gel polymer electrolyte composition and the second gel polymer electrolyte composition, wherein a content of the first oligomer in the first gel polymer electrolyte composition is less than a content of the second oligomer in the second gel polymer electrolyte composition.

According to another aspect of the present invention, there is provided a secondary battery including an electrode assembly in which a positive electrode, a separator, and a negative electrode are alternatingly disposed, a battery case accommodating the electrode assembly, and an electrolyte, wherein the electrolyte includes a first gel polymer electrolyte disposed inside the electrode assembly and a second gel polymer electrolyte disposed outside the electrode assembly, and interfacial resistance of the first gel polymer electrolyte is lower than interfacial resistance of the second gel polymer electrolyte.

### ADVANTAGEOUS EFFECTS

A method of preparing a secondary battery according to the present invention is characterized in that, since a first gel polymer electrolyte composition having a low oligomer content is first injected and a second gel polymer electrolyte composition is injected later, a gel polymer electrolyte formed from the first gel polymer electrolyte composition is impregnated inside an electrode assembly and a gel polymer electrolyte formed from the second gel polymer electrolyte composition is disposed outside the electrode assembly. Accordingly, since the first gel polymer electrolyte composition and the second gel polymer electrolyte composition, which have different oligomer contents from each other, are respectively cured inside and outside the electrode assembly to form the gel polymer electrolytes, both interfacial resistance and rigidity of a secondary battery prepared by the above preparation method may be improved.

Also, a secondary battery according to the present invention is characterized in that it includes a first gel polymer electrolyte disposed inside the electrode assembly and a second gel polymer electrolyte disposed outside the electrode assembly, and interfacial resistance of the first gel polymer electrolyte is lower than interfacial resistance of the second gel polymer electrolyte. Since the first gel polymer electrolyte has relatively low interfacial resistance, mobility of lithium between a positive electrode and a negative electrode may be improved when the first gel polymer electrolyte is impregnated inside the electrode assembly. Since the second gel polymer electrolyte has relatively high interfacial resistance, but has high rigidity, it may effectively protect the electrode assembly from external impact and may prevent external leakage of the electrolyte when the second gel polymer electrolyte is disposed outside the electrode assembly.

### BRIEF DESCRIPTION OF THE DRAWINGS

FIG. 1 is a schematic view for explaining step (S2) of a method of preparing a secondary battery according to the present invention.
FIG. 2 is a schematic view for explaining the step (S2) of the method of preparing a secondary battery according to the present invention.
FIG. 3 is a schematic view for explaining step (S3) of the method of preparing a secondary battery according to the present invention.
FIG. 4 is a schematic view for explaining step (S4) of the method of preparing a secondary battery according to the present invention.
FIG. 5 is a schematic plan view of a secondary battery according to the present invention.
FIG. 6 is a schematic side view of the secondary battery according to the present invention.

### MODE FOR CARRYING OUT THE INVENTION

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

Hereinafter, a method of preparing a secondary battery and a secondary battery of the present invention will be described in detail with reference to the drawings. In adding reference numerals to components of each drawing, it should be noted that the same reference numerals may be assigned to the same components as much as possible even though they are shown in different drawings. In addition, in describing the present invention, when it is determined that a detailed description of a related known configuration or function may obscure the gist of the present invention, the detailed description thereof will be omitted.

### Method of Preparing Secondary Battery

A method of preparing a secondary battery according to the present invention is characterized in that the method includes the steps of:
(S1) preparing a first gel polymer electrolyte composition including a first oligomer, and a second gel polymer electrolyte composition including a second oligomer;
(S2) injecting the first gel polymer electrolyte composition into a battery case, in which an electrode assembly is accommodated, to impregnate inside of the electrode assembly with the first gel polymer electrolyte composition;
(S3) injecting the second gel polymer electrolyte composition into the battery case; and
(S4) curing the first gel polymer electrolyte composition and the second gel polymer electrolyte composition which have been injected into the battery case,
   wherein a content of the first oligomer in the first gel polymer electrolyte composition is less than a content of the second oligomer in the second gel polymer electrolyte composition.

### (1) Preparing of the First Gel Polymer Electrolyte Composition and the Second Gel Polymer Electrolyte Composition (S1)

First, a first gel polymer electrolyte composition including a first oligomer and a second gel polymer electrolyte composition including a second oligomer are prepared (S1).

With respect to a gel polymer electrolyte composition such as the first gel polymer electrolyte composition and the second gel polymer electrolyte composition, oligomers or polymers included therein may be crosslinked to each other and cured to form an electrolyte (gel polymer electrolyte) which is cured in the form of a gel.

An oligomer, such as the first oligomer and the second oligomer, may denote a compound in which about 10 or less monomers are polymerized.

A content of the first oligomer in the first gel polymer electrolyte composition may be less than a content of the second oligomer in the second gel polymer electrolyte composition.

The oligomer, which may be included in the gel polymer electrolyte composition, may affect rigidity and interfacial resistance of the gel polymer electrolyte depending on a content thereof. For example, in a case in which the oligomer content in the gel polymer electrolyte is high, the rigidity of the gel polymer electrolyte may be increased, but the interfacial resistance may be increased and ionic conductivity may be decreased. In a case in which the oligomer content in the gel polymer electrolyte is low, the interfacial resistance of the gel polymer electrolyte may be decreased and the ionic conductivity may be increased, but the rigidity of the gel polymer electrolyte may be decreased.

According to the present invention, since the content of the first oligomer in the first gel polymer electrolyte composition is less than the content of the second oligomer in the second gel polymer electrolyte composition, the first gel polymer electrolyte formed from the first gel polymer electrolyte composition may have lower interfacial resistance than the second gel polymer electrolyte formed from the second gel polymer electrolyte composition. Particularly, as described below, a gel polymer electrolyte (for example, the first gel polymer electrolyte) formed from the first gel polymer electrolyte composition may reduce interfacial resistance of the electrode assembly or secondary battery by being impregnated inside the electrode assembly and then being cured. A gel polymer electrolyte (for example, the second gel polymer electrolyte) formed from the second gel polymer electrolyte composition may have better rigidity than the gel polymer electrolyte formed from the first gel polymer electrolyte composition, may be disposed outside the electrode assembly and cured to improve rigidity of the secondary battery, may prevent leakage of the secondary battery, and may further improve safety of the secondary battery.

Specifically, the content of the first oligomer included in the first gel polymer electrolyte composition may be in a range of 0.5 wt% to 5 wt%, preferably, 1 wt% to 3 wt% based on a weight of the first gel polymer electrolyte composition. When the content of the first oligomer is within the above range, since ionic conductivity of the first gel polymer electrolyte may be further improved, an effect of reducing the interfacial resistance when the first gel polymer electrolyte is impregnated inside the electrode assembly may be further improved and lithium ion movement between a positive electrode and a negative electrode in the electrode assembly may be performed smoothly.

Also, the content of the second oligomer included in the second gel polymer electrolyte composition may be in a range of 5 wt% to 30 wt%, specifically, 7 wt% to 10 wt% based on a weight of the second gel polymer electrolyte composition. When the content of the second oligomer is within the above range, a rigidity improvement effect of the second gel polymer electrolyte may be further improved, and viscosity of the second gel polymer electrolyte composition is appropriately adjusted so that the gel polymer electrolyte formed from the second gel polymer electrolyte composition may be uniformly distributed outside the electrode assembly.

The first oligomer and the second oligomer may be the same material or may be different materials from each other.

Specifically, the first oligomer and the second oligomer may each independently include at least one selected from the group consisting of a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, polyethylene oxide, polyester sulfide, polyvinyl alcohol, and polyvinylidene fluoride.

Specifically, the first oligomer and the second oligomer may include a fluorine-based monomer-derived unit, and, in this case, a fluorine-based functional group included in the first oligomer or second oligomer may suppress oxygen radical generation due to decomposition of a positive electrode active material to further improve battery stability. More specifically, the first oligomer and the second oligomer may each independently include at least one selected from a tetrafluoroethylene (TFE)-vinyl acetate copolymer, an (allyl 1,1,2,2-tetrafluoroethyl ether)-(2,2,2-trifluoro ethyl acrylate) copolymer, a tetrafluoroethylene-(2-vinyl-1,3-dioxolane) copolymer, and a tetrafluoroethylene-vinyl methacrylate copolymer.

The first gel polymer electrolyte composition and the second gel polymer electrolyte composition may each independently further include a solvent.

The solvent is commonly used in a secondary battery, wherein, for example, ether, ester (acetates, propionates), amide, linear carbonate or cyclic carbonate, or nitrile (acetonitrile, SN, etc.) may be used alone or as a mixture of two or more thereof.

Among them, a carbonate-based solvent including a cyclic carbonate, a linear carbonate, or a carbonate compound, as a mixture thereof, may be typically used.

Specific examples of the cyclic carbonate compound may be a single compound selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and halides thereof, or a mixture of at least two thereof. Also, as a specific examples of the linear carbonate compound, a compound selected from the group consisting of dimethyl carbonate (DMC), diethyl carbonate (DEC), dipropyl carbonate (DPC), ethylmethyl carbonate (EMC), methylpropyl carbonate (MPC), and ethylpropyl carbonate (EPC), or a mixture of at least two thereof may typically be used, but the present invention is not limited thereto.

Particularly, among the carbonate-based solvents, since propylene carbonate and ethylene carbonate, as cyclic carbonates, well dissociate a lithium salt in an electrolyte solution due to high permittivity as a highly viscous organic solvent, the propylene carbonate and ethylene carbonate may be preferably used, and, since an electrolyte solution having high electrical conductivity may be prepared when the above cyclic carbonate is mixed with the low viscosity, low permittivity linear carbonate, such as ethylmethyl carbonate, diethyl carbonate, or dimethyl carbonate, in an appropriate ratio, the cyclic carbonate may be more preferably used.

Also, as the ester in the solvent, a single compound selected from the group consisting of methyl acetate, ethyl acetate, propyl acetate, methyl propionate, ethyl propionate, γ-butyrolactone, γ-valerolactone, γ-caprolactone, α-valerolactone, and ε-caprolactone, or a mixture of at least two thereof may be used, but the present invention is not limited thereto.

At least one of the first gel polymer electrolyte composition and the second gel polymer electrolyte composition may include a lithium salt. The lithium salt may be used for the purpose of providing lithium ions to the secondary battery.

Specifically, a lithium salt may be included in any one of the first gel polymer electrolyte composition and the second gel polymer electrolyte composition. For example, a lithium salt may be included in only one of the first gel polymer electrolyte composition and the second gel polymer electrolyte composition. A lithium salt may be included in both the first gel polymer electrolyte composition and the second gel polymer electrolyte composition.

The lithium salt may be used without particular limitation as long as it is a compound capable of providing lithium ions which is used in a secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂ may be used. The lithium salt may be used in a concentration range of 0.1 M to 5.0 M, preferably, 0.1 M to 3.0 M. Since the electrolyte has appropriate conductivity and viscosity when the concentration of the lithium salt is included in the above range, excellent electrolyte performance may be exhibited and lithium ions may move effectively.

At least one of the first gel polymer electrolyte composition and the second gel polymer electrolyte composition may include a polymerization initiator. The polymerization initiator may be used for the purpose of forming a polymer network bonded in a three-dimensional structure by polymerizing the first oligomer and/or the second oligomer.

Specifically, a polymerization initiator may be included in any one of the first gel polymer electrolyte composition and the second gel polymer electrolyte composition. For example, a polymerization initiator may be included in the first gel polymer electrolyte composition, a polymerization initiator may not be included in the second gel polymer electrolyte composition, and, in this case, the first oligomer and the second oligomer may be polymerized and cured by the polymerization initiator included in the first gel polymer electrolyte composition. A polymerization initiator may be included in both the first gel polymer electrolyte composition and the second gel polymer electrolyte composition.

The polymerization initiator may be a photopolymerization initiator or a thermal polymerization initiator according to a polymerization method.

Specifically, as a representative example, the photopolymerization initiator may include at least one compound selected from the group consisting of 2-hydroxy-2-methylpropiophenone (HMPP), 1-hydroxy-cyclohexylphenyl-ketone, benzophenone, 2-hydroxy-1-[4-(2-hydroxyethoxy)phenyl]-2-methyl-1-propanone, oxy-phenylacetic acid 2-[2-oxo-2-phenyl-acetoxy-ethoxy]-ethyl ester, oxy-phenyl-acetic 2-[2-hydroxyethoxy]-ethyl ester, alpha-dimethoxy-alpha-phenylacetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl(2,4,6-trimethylbenzoyl)-phosphine oxide, bis(2,4,6-trimethylbenzoyl)-phenylphosphine oxide, bis(eta 5-2,4-cyclopentadiene-1-yl), bis[2,6-difluoro-3-(1H-pyrrol-1-yl) phenyl]titanium, 4-isobutylphenyl-4'-methylphenyl iodonium hexafluorophosphate, and methyl benzoylformate.

Also, as a representative example, the thermal polymerization initiator may include at least one compound selected from the group consisting of benzoyl peroxide, acetyl peroxide, dilauryl peroxide, di-tert-butyl peroxide, t-butyl peroxy-2-ethyl-hexanoate, cumyl hydroperoxide, hydrogen peroxide, 2,2'-azobis(2-cyanobutane), 2,2'-azobis(methylbutyronitrile), 2,2'-azobis(iso-butyronitrile) (AIBN), and 2,2'-azobisdimethyl-valeronitrile (AMVN).

The polymerization initiator forms a radical by being dissociated by heat at 30°C to 100°C in the secondary battery or by being dissociated by light, such as ultraviolet (UV), at room temperature (5°C to 30°C), and forms cross-linking by free radical polymerization so that an oligomer may be polymerized.

The polymerization initiator may be used in an amount of 0.001 part by weight to 0.1 part by weight, preferably 0.0015 part by weight to 0.015 part by weight, and more preferably 0.002 part by weight to 0.01 part by weight based on 100 parts by weight of the oligomer (the first oligomer or the second oligomer). In a case in which the amount of the polymerization initiator used is within the above range, an amount of the unreacted polymerization initiator, which may adversely affect battery performance, may be minimized. Also, in a case in which the polymerization initiator is used within the above range, gelation of the electrolyte composition may be performed properly.

The first gel polymer electrolyte composition and the second gel polymer electrolyte composition may further include an additive in addition to the above components in order to improve life characteristics of the battery, suppress the reduction in battery capacity, and improve discharge capacity of the battery. For example, as the additive, a halo-alkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be used alone or in a mixture thereof, but the present invention is not limited thereto. The additive may be included in an amount of 0.1 wt% to 10 wt%, preferably, 0.1 wt% to 5 wt% based on a total weight of the electrolyte.

Viscosity at 25°C of the first gel polymer electrolyte composition may be in a range of 6 cP or less, preferably, 1 cP to 5 cP. In a case in which the viscosity of the first gel polymer electrolyte composition satisfies the above-described range, the gel polymer electrolyte formed from the first gel polymer electrolyte composition may smoothly promote the movement of lithium ions between the positive electrode and the negative electrode in the electrode assembly.

Viscosity at 25°C of the second gel polymer electrolyte composition may be in a range of 10 cP or more, preferably, 11 cP to 20 cP. In a case in which the viscosity of the second gel polymer electrolyte composition satisfies the above-described range, since the rigidity of the gel polymer electrolyte formed from the second gel polymer electrolyte composition may be further improved, the stability of the secondary battery may be improved.

### (2) Injecting and Impregnating of the First Gel Polymer Electrolyte (S2)

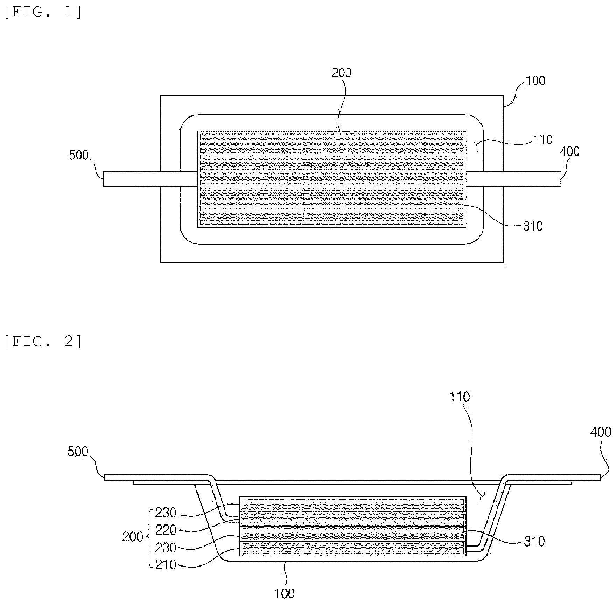

Referring to FIGS. 1 and 2, a first gel polymer electrolyte composition 310 is injected into a battery case 100, in which an electrode assembly 200 is accommodated, to impregnate inside of the electrode assembly 200 with the first gel polymer electrolyte composition 310 (S2).

The battery case 100 may be provided for accommodating the electrode assembly 200 and the electrolyte therein. The battery case 100 may be a pouch-shaped case formed of a flexible material, for example, may be an aluminum pouch battery case.

In a case in which the battery case 100 is an aluminum pouch battery case, the battery case 100, for example, may be formed of a pouch film in which a polypropylene layer (PP layer), an aluminum layer, and a polyethylene terephthalate layer (PET layer) are stacked in this order from the inside.

The battery case 100 may include an accommodation space 110 for accommodating the electrode assembly.

The battery case 100 may include a cover (not shown), and, after the accommodation of the electrode assembly and curing and gelation of the gel polymer electrolyte composition, a sealed secondary battery may be prepared by sealing the battery case 100 with the cover.

The electrode assembly 200 is accommodated in the battery case 100. Specifically, the electrode assembly 200 may be accommodated in the accommodation space 110 of the battery case 100.

The electrode assembly 200 may be one in which a positive electrode 210, a separator 230, and a negative electrode 220 are alternatingly disposed.

Specifically, the electrode assembly 200 may be a stacked structural body including two types of electrodes, such as the positive electrode 210 and the negative electrode 220, and the separator 230 which is disposed between the electrodes to insulate the electrodes from each other or disposed above or under any one electrode. The stacked structural body is not limited, for example, the positive electrode 210 and the negative electrode 220 of predetermined specifications may be stacked with the separator 230 disposed therebetween, and may be wound in the form of a jelly roll, and the stacked structural body may have various shapes.

More specifically, the electrode assembly 200 may be a stack type electrode assembly, and may include the positive electrode 210, the separator 230, the negative electrode 220, and the separator 230 which are sequentially stacked as shown in FIG. 2. When a structure, in which the positive electrode 210, the separator 230, the negative electrode 220, and the separator 230 are sequentially stacked, is defined as one unit, the electrode assembly 200 may be one in which two or more units are stacked.

The positive electrode 210 and the negative electrode 220 may have a structure in which active material slurries are applied to current collectors in the form of a metal foil or metal mesh including aluminum and copper, respectively. The positive electrode 210 and the negative electrode 220 may have a structure which is formed by applying the active material slurry on both sides of the current collector, drying, and rolling. The active material slurry may be formed by stirring in a state in which a granular active material, a conductive agent, and a binder are added to a solvent. Any active materials, conductive gents, and binders, which are used in the art, may be used without limitation as the active materials, the conductive agents, and the binders which are used in the positive electrode 210 and the negative electrode 220, respectively.

As illustrated in FIGS. 1 and 2, a positive electrode tab 400 and a negative electrode tab 500 may be connected to the electrode assembly. Specifically, the positive electrode tab 400 and the negative electrode tab 500 are connected to the positive electrode 210 and the negative electrode 220 of the electrode assembly 200, respectively, and protrude outside the battery case 100 so that they become a path through which electrons may move. Also, in FIGS. 1 and 2, it is illustrated that the positive electrode tab 400 and the negative electrode tab 500 are disposed in different directions with respect to the electrode assembly 200, respectively, but are not limited thereto, and the positive electrode tab 400 and the negative electrode tab 500 may protrude side by side from one side of the electrode assembly 200 in the same direction.

The first gel polymer electrolyte composition 310 is injected into the battery case 100, and the inside of the electrode assembly 200 is impregnated with the first gel polymer electrolyte composition 310. Specifically, the first gel polymer electrolyte composition 310 may impregnate the positive electrode 210, the negative electrode 220, and the separator 230 of the electrode assembly 200, and mobility of ions between the positive electrode 210 and the negative electrode 220 may be secured through this.

The impregnation with the first gel polymer electrolyte composition 310 may be performed at a temperature of 10°C to 30°C for 0.5 hours to 72 hours, and may preferably be performed at a temperature of 15°C to 30°C for 40 hours to 60 hours.

In order to impregnate the inside of the electrode assembly 200 with the first gel polymer electrolyte composition 310 and to dispose the gel polymer electrolyte formed from the first gel polymer electrolyte composition 310 inside the electrode assembly 200, an amount of the first gel polymer electrolyte composition 310 injected may be calculated in advance and adjusted.

If necessary, the first gel polymer electrolyte composition 310 may be cured after step (S2).

This step is not essential, and, as will be described later, the first gel polymer electrolyte composition 310 and a second gel polymer electrolyte composition 320 may be cured together in step (S4) after injection of the second gel polymer electrolyte composition. However, in a case in which a curing process is performed after the impregnation with the first gel polymer electrolyte composition 310, there is an advantage in that flowing out of the first gel polymer electrolyte composition 310 to the outside of the electrode assembly 200 before the injection of the second gel polymer electrolyte composition 320 may be prevented and mixing of the first gel polymer electrolyte composition 310 and the second gel polymer electrolyte composition 320 together may be prevented.

In this case, the curing may be performed at a temperature of 50°C to 100°C for 0.5 hours to 48 hours, and may preferably be performed at a temperature of 60°C to 80°C for 0.5 hours to 24 hours.

### (3) Injecting of the Second Gel Polymer Electrolyte Composition (S3)

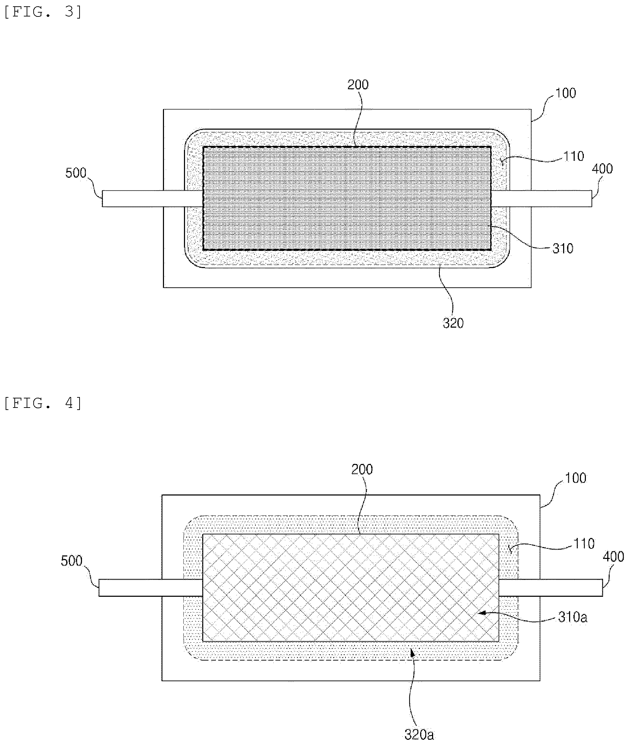

Referring to FIG. 3, thereafter, the second gel polymer electrolyte composition 320 is injected into the battery case 100 (S3).

As illustrated in FIG. 3, the second gel polymer electrolyte composition 320 is injected to the inside of the battery case 100. Specifically, the second gel polymer electrolyte composition 320 may be injected to the inside of the battery case 100 and the outside of the electrode assembly 200 impregnated with the first gel polymer electrolyte composition 310.

In order to easily dispose the second gel polymer electrolyte composition 320 and the gel polymer electrolyte prepared therefrom outside the electrode assembly 200, an amount of the second gel polymer electrolyte composition 320 injected may be calculated in advance and adjusted.

After the second gel polymer electrolyte composition 320 is injected, the battery case 100 may be sealed. Specifically, the battery case 100 may further include a cover (not shown), and the battery case 100 may be sealed with the cover (not shown).

### (4) Curing of the First Gel Polymer Electrolyte Composition and/or the Second Gel Polymer Electrolyte Composition (S4)

Referring to FIG. 4, thereafter, the first gel polymer electrolyte composition 310 and/or the second gel polymer electrolyte composition 320, which have been injected into the battery case, are cured (S4).

The curing of the first gel polymer electrolyte composition 310 and/or the second gel polymer electrolyte composition 320 may be performed by a photocuring process or a thermal curing process, and may specifically be performed by a thermal curing process.

As illustrated in FIG. 4, the first gel polymer electrolyte composition 310 and/or the second gel polymer electrolyte composition 320 may be cured to form a first gel polymer electrolyte 310a and a second gel polymer electrolyte 320a, respectively.

Even if only this step is performed without performing the curing process after the impregnation with the first gel polymer electrolyte composition 310, the first gel polymer electrolyte composition 310 and the second gel polymer electrolyte composition 320 are cured together in this process. In this case, since the curing step is included only once, there is an advantage in that preparation time may be shortened and a preparation process may be relatively simplified. However, in a case in which curing is performed only in step (S4) in order to prevent the first gel polymer electrolyte composition 310 and the second gel polymer electrolyte composition 320 from being mixed with each other before the curing, it is desirable that the curing process is performed immediately after the injecting of the second gel polymer electrolyte composition 320 into the battery case 100 (step S3) .

In this case, the curing may be performed at a temperature of 50°C to 100°C for 0.5 hours to 48 hours, and may preferably be performed at a temperature of 60°C to 80°C for 0.5 hours to 24 hours.

The curing may be performed in a state in which the battery case 100 is sealed. For example, after the battery case 100, in which the electrode assembly 200, the first gel polymer electrolyte composition 310, and the second gel polymer electrolyte composition 320 are accommodated, is sealed with a cover or the like, a heat treatment may be performed to thermally cure the first gel polymer electrolyte composition 310 and the second gel polymer electrolyte composition 320.

After step (S4), a process of cooling the cured first gel polymer electrolyte composition 310 and second gel polymer electrolyte composition 320 may be further performed. The cooling, for example, may be performed by placing the cured first gel polymer electrolyte composition 310 and second gel polymer electrolyte composition 320 at room temperature.

After step (S4), the battery case 100 may be sealed, and the inside of the battery case 100 may be formed in a vacuum atmosphere. According to the formation of the vacuum atmosphere, degassing of gas generated during the curing may be performed.

### Secondary Battery

The present invention provides a secondary battery, specifically, a lithium secondary battery.

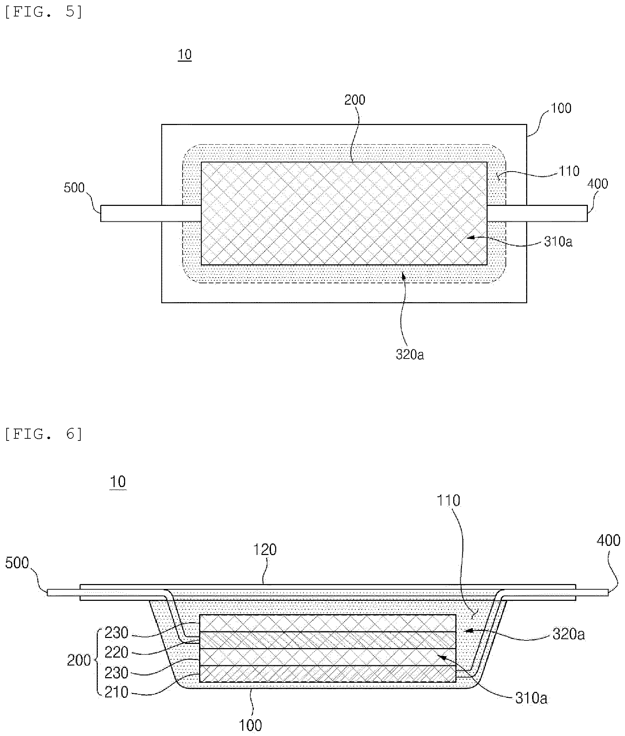

When described in more detail through FIGS. 5 and 6, a secondary battery 10 is characterized in that it includes the electrode assembly 200 in which the positive electrode 210, the separator 230, and the negative electrode 220 are alternatingly disposed; the battery case 100 accommodating the electrode assembly 200; and an electrolyte, wherein the electrolyte includes the first gel polymer electrolyte 310a disposed inside the electrode assembly 200 and the second gel polymer electrolyte 320a disposed outside the electrode assembly 200, and interfacial resistance of the first gel polymer electrolyte 310a is lower than interfacial resistance of the second gel polymer electrolyte 320a.

In the secondary battery according to the present invention, since the interfacial resistance of the first gel polymer electrolyte 310a is relatively low, mobility of lithium between the positive electrode 210 and the negative electrode 220 may be improved when the first gel polymer electrolyte 310a is impregnated inside the electrode assembly 200, but, since the second gel polymer electrolyte 320a has relatively high interfacial resistance but also has high rigidity, it may effectively protect the electrode assembly 200 from external impact when disposed outside the electrode assembly 200. Also, since the second gel polymer electrolyte 320a is disposed outside the electrode assembly 200, there is an effect that the electrolyte does not leak to the outside even in a case in which a portion of a surface of the secondary battery 10 is cut.

Descriptions of the battery case 100 and the electrode assembly 200 are the same as described above.

As illustrated in FIGS. 5 and 6, the first gel polymer electrolyte 310a is disposed inside the electrode assembly 200, and the second gel polymer electrolyte 320a is disposed outside the electrode assembly 200.

The interfacial resistance of the first gel polymer electrolyte 310a is lower than the interfacial resistance of the second gel polymer electrolyte 320a. Since the first gel polymer electrolyte 310a is impregnated inside the electrode assembly 200 of the secondary battery 10 and the interfacial resistance is low, the mobility of lithium ions between the positive electrode 210 and the negative electrode 220 of the electrode assembly 200 may be improved. Since the second gel polymer electrolyte 320a is disposed outside the electrode assembly 200 and the interfacial resistance is somewhat high but rigidity is improved due to a high degree of cure, physical stability of the secondary battery 10 is improved and an electrolyte leakage problem may be prevented.

The interfacial resistances of the first gel polymer electrolyte 310a and the second gel polymer electrolyte 320a, for example, may be achieved by adjusting the oligomer contents of the gel polymer electrolyte compositions for forming them. Specifically, in a case in which the oligomer content of the gel polymer electrolyte composition is increased, the mobility of lithium ions may be decreased but the rigidity may be increased, and, in contrast, in a case in which the oligomer content of the gel polymer electrolyte composition is decreased, the rigidity is decreased but the mobility of lithium ions may be improved. More specifically, the first gel polymer electrolyte 310a may be formed by curing of the above-described first gel polymer electrolyte composition, and the second gel polymer electrolyte 320a may be formed by curing of the above-described second gel polymer electrolyte composition.

The interfacial resistance of the first gel polymer electrolyte 310a may be in a range of 2.0 mΩ to 2.6 mΩ, and may preferably be in a range of 2.32 mΩ to 2.51 mΩ. Since the interfacial resistance of the first gel polymer electrolyte 310a satisfies the numerical range as described above, the mobility of lithium ions of the secondary battery 10 may be improved.

The interfacial resistance of the second gel polymer electrolyte 320a may be in a range of 2.6 mΩ to 3.0 mΩ, and may preferably be in a range of 2.70 mΩ to 2.90 mΩ. Since the interfacial resistance and the rigidity of the gel polymer electrolyte are in a trade-off relationship with each other, it may be understood that the second gel polymer electrolyte 320a has a desirable level of rigidity when the interfacial resistance of the second gel polymer electrolyte 320a satisfies the numerical range as described above.

The expression "interfacial resistance of the gel polymer electrolyte" in the present specification may be defined as resistance of an interface between the gel polymer electrolyte and the electrode assembly. Specifically, the interfacial resistance of the gel polymer electrolyte may be calculated using a voltage change (ΔV) which is measured when a battery including the gel polymer electrolyte and the electrode assembly is discharged at 2.5 C rate for 10 seconds at a state of charge (SOC) of 50%. Since the secondary battery of the present invention includes the first gel polymer electrolyte and the second gel polymer electrolyte, there is a problem in that it is difficult to measure the interfacial resistance of each of the first gel polymer electrolyte and the second gel polymer electrolyte. Thus, with respect to the interfacial resistance of each of the first gel polymer electrolyte and the second gel polymer electrolyte according to the present specification, secondary battery samples including only the first gel polymer electrolyte or the second gel polymer electrolyte, respectively, are prepared, and each of interfacial resistance values measured using the secondary battery samples is defined as an interfacial resistance value of the first gel polymer electrolyte or the second gel polymer electrolyte.

The rigidity of the secondary battery 10 may be in a range of 5 MPa/2mm to 10 MPa/2mm, and may preferably be in a range of 6 MPa/2mm to 8 MPa/2mm. Since the rigidity of the secondary battery 10 satisfies the numerical range as described above, the electrode assembly 200 may be stably protected from external impact and there is an effect that the electrolyte does not leak even when a portion of a surface of the battery case 100 is cut.

The rigidity of the secondary battery 10 is a stress value which is measured when a displacement of 2 mm is applied to the center of a cell at a rate of 10 mm/min using a universal testing machine (UTM).

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

### S1: Preparation of the First Gel Polymer Electrolyte Composition and the Second Gel Polymer Electrolyte Composition

A first gel polymer electrolyte composition was prepared by mixing a tetrafluoroethylene (TFE)-vinyl acetate copolymer as an oligomer, a solvent, LiPF₆ as a lithium salt, and azobisisobutyronitrile (AIBN), as a polymerization initiator, in a solvent.

The solvent was a mixture of ethyl carbonate (EC) and ethylmethyl carbonate (EMC) in a volume ratio of 3:7, the lithium salt was included in the first gel polymer electrolyte composition at a concentration of 1.0 M, the oligomer was included in an amount of 2 wt% based on a weight of the first gel polymer electrolyte composition, and the polymerization initiator was included in an amount of 0.02 wt% based on the weight of the first gel polymer electrolyte composition.

A second gel polymer electrolyte composition was prepared in the same manner as in the first gel polymer electrolyte composition except that the oligomer was added in an amount of 8 wt% based on a weight of the second gel polymer electrolyte composition.

### S2: Injection and Impregnation of the First Gel Polymer Electrolyte

An electrode assembly was prepared in which 19 units, in which a positive electrode, a separator, a negative electrode, and a separator were sequentially stacked, were stacked.

A pouch-type battery case formed of aluminum was prepared as a battery case, and the electrode assembly was accommodated in an accommodation space of the battery case.

Thereafter, 65 g of the prepared first gel polymer electrolyte composition was injected into the battery case in which the electrode assembly had been accommodated. After the injection of the first gel polymer electrolyte composition, vacuum sealing was performed to impregnate the inside of the electrode assembly at room temperature for 48 hours.

### S3: Injection of the Second Gel Polymer Electrolyte Composition

The prepared second gel polymer electrolyte composition was injected into the battery case. 15 g of the prepared second gel polymer electrolyte composition was injected into the battery case in which the electrode assembly had been accommodated, and the battery case was sealed.

### S4: Curing of the First Gel Polymer Electrolyte Composition and the Second Gel Polymer Electrolyte Composition

Thereafter, the first gel polymer electrolyte composition and the second gel polymer electrolyte composition, which had been injected into the battery case, were cured. The first gel polymer electrolyte composition and the second gel polymer electrolyte composition were cured by performing a heat treatment at a temperature of 60°C for 5 hours.

Thereafter, a secondary battery was prepared by cooling, sealing, and degassing the heat-treated battery case.

### Example 2

A first gel polymer electrolyte composition was prepared in the same manner as in the preparation method of the first gel polymer electrolyte composition of Example 1 except that 2 wt% of an (allyl 1,1,2,2-tetrafluoroethyl ether (TFE))-(2,2,2-trifluoroethyl acrylate) copolymer was included instead of 2 wt% of the TFE-vinyl acetate copolymer.

A secondary battery was prepared in the same manner as in Example 1 except that the above-prepared first gel polymer electrolyte composition was used.

### Comparative Example 1

A first gel polymer electrolyte composition and a second gel polymer electrolyte composition were prepared in the same manner as in Example 1 except that the oligomer was not included in each of the first gel polymer electrolyte composition and the second gel polymer electrolyte composition.

A secondary battery was prepared in the same manner as in Example 1 except that the above-prepared first gel polymer electrolyte composition and second gel polymer electrolyte composition were used.

### Comparative Example 2

A first gel polymer electrolyte composition was prepared in the same manner as in Example 1 except that the tetrafluoroethylene (TFE)-vinyl acetate copolymer, as an oligomer, was included in an amount of 5 wt% based on a weight of the first gel polymer electrolyte composition.

Also, a second gel polymer electrolyte composition was prepared in the same manner as in Example 1 except that the tetrafluoroethylene (TFE)-vinyl acetate copolymer, as an oligomer, was included in an amount of 5 wt% based on a weight of the second gel polymer electrolyte composition.

A secondary battery was prepared in the same manner as in Example 1 except that the above-prepared first gel polymer electrolyte composition and second gel polymer electrolyte composition were used.

### Comparative Example 3

A first gel polymer electrolyte composition was prepared in the same manner as in Example 1 except that an (allyl 1,1,2,2-tetrafluoroethyl ether (TFE))-(2,2,2-trifluoroethyl acrylate) copolymer, instead of the tetrafluoroethylene (TFE)-vinyl acetate copolymer, was used as an oligomer and was included in an amount of 5 wt% based on a weight of the first gel polymer electrolyte composition.

Also, a second gel polymer electrolyte composition was prepared in the same manner as in Example 1 except that an (allyl 1,1,2,2-tetrafluoroethyl ether (TFE))-(2,2,2-trifluoroethyl acrylate) copolymer, instead of the tetrafluoroethylene (TFE)-vinyl acetate copolymer, was used as an oligomer and was included in an amount of 5 wt% based on a weight of the second gel polymer electrolyte composition.

A secondary battery was prepared in the same manner as in Example 1 except that the above-prepared first gel polymer electrolyte composition and second gel polymer electrolyte composition were used.

### Experimental Example 1 - Measurement of Interfacial Resistance of Gel Polymer Electrolyte

### (1) Preparation of Reference Examples 1 and 2

### Reference Example 1: Preparation of Secondary Battery Including Gel Polymer Electrolyte X

A gel polymer electrolyte composition including a solvent, a lithium salt, an oligomer, and a polymerization initiator was prepared. The solvent was a mixture of ethyl carbonate (EC) and ethylmethyl carbonate (EMC) in a volume ratio of 3:7, the lithium salt, as LiPF₆, was included in the gel polymer electrolyte composition at a concentration of 1.0 M, a TFE-vinyl acetate copolymer, as the oligomer, was included in an amount of 5 wt% based on a weight of the gel polymer electrolyte composition, and the polymerization initiator was AIBN and was included in an amount of 0.02 wt% based on the weight of the gel polymer electrolyte composition.

A secondary battery was prepared in the same manner as in Example 1 except that the first gel polymer electrolyte composition and the second gel polymer electrolyte composition were not used and 80 g of only the gel polymer electrolyte composition was injected into a battery case and cured to form gel polymer electrolyte X.

### Reference Example 2: Preparation of Secondary Battery Including Gel Polymer Electrolyte Y

A secondary battery was prepared in the same manner as in Reference Example 1 except that, in Reference Example 1, a gel polymer electrolyte composition was formed by including 10 wt% of the TFE-vinyl acetate copolymer, instead of 5 wt% of the TFE-vinyl acetate copolymer, as an oligomer, and gel polymer electrolyte Y was formed by curing the gel polymer electrolyte composition.

### (2) Interfacial Resistance Measurement

Using the secondary batteries of Reference Example 1 and Reference Example 2, 10s resistance in a reference performance test (RPT) of a cell was measured. Specifically, resistance values measured based on voltage changes (ΔV), which were measured when the secondary batteries of Reference Example 1 and Reference Example 2 were discharged at 2.5 C rate for 10 seconds at an SOC of 50%, were determined as interfacial resistance values of Reference Example 1 and Reference Example 2.

**[Table 1]**

| | Gel polymer electrolyte | Interfacial resistance (mΩ) |
|---|---|---|
| Reference Example 1 | X | 2.323 |
| Reference Example 2 | Y | 2.790 |

Referring to Table 1, since the amount of the oligomer of the gel polymer electrolyte X was lower than the amount of the oligomer of the gel polymer electrolyte Y, it may be confirmed that its interfacial resistance was lower. Since the gel polymer electrolyte X had low interfacial resistance, it may be predicted that the impregnation of the inside of the electrode assembly with the gel polymer electrolyte composition having a low oligomer content may facilitate the movement of lithium ions in the secondary battery. Since the gel polymer electrolyte Y had high interfacial resistance, rigidity of the cell in a trade-off relationship therewith will be increased, and, accordingly, it may be predicted that stability of the secondary battery against external impact may be improved in a case in which the gel polymer electrolyte prepared from the gel polymer electrolyte composition having a high oligomer content was disposed on the outside of the electrode assembly. Accordingly, with respect to the secondary battery according to the present invention, the mobility of lithium ions and the stability of the secondary battery may be improved at the same time by disposing the first gel polymer electrolyte having relatively low interfacial resistance and the second gel polymer electrolyte having relatively high interfacial resistance inside and outside the electrode assembly, respectively, and this effect may be confirmed by Experimental Examples 2 to 4 to be described later.

### Experimental Example 2 - Rigidity Measurement

Rigidity was measured for the secondary batteries prepared in Examples 1 and 2 and Comparative Examples 1 to 3. Specifically, a stress value, when a displacement of 2 mm was applied by applying a downward force to the center of each secondary battery according to a 3-point bending method, was measured. The experiment was performed at room temperature, and the stress value was measured with a universal testing machine (UTM). The results thereof are presented in Table 2 below.

### Experimental Example 3 - Measurement of Leakage Amount of the Gel Polymer Electrolyte

A leakage amount of the gel polymer electrolyte was measured for the secondary batteries prepared in Examples 1 and 2 and Comparative Examples 1 to 3. A 5 cm incision was made on a side portion of each secondary battery, and an amount of the electrolyte leaked from each secondary battery, when the incised portion was positioned as a lower end of the battery and was left standing for 3 days, was measured. The results thereof are presented in Table 2 below.

### Experimental Example 4 - Interfacial Resistance Measurement

Interfacial resistances of the secondary batteries of Examples 1 and 2 and Comparative Examples 1 to 3 were measured. Specifically, resistance values calculated using voltage changes (ΔV), which were measured when the secondary batteries of Examples 1 and 2 and Comparative Examples 1 to 3 were discharged at 2.5 C rate for 10 seconds at an SOC of 50%, were determined as interfacial resistance values of the secondary batteries of Examples 1 and 2 and Comparative Examples 1 to 3, respectively. The results thereof are presented in Table 2 below.

**[Table 2]**

| | | Example 1 | Example 2 | Comparat ive Example 1 | Comparat ive Example 2 | Comparat ive Example 3 |
|---|---|---|---|---|---|---|
| First gel polymer electro lyte composi tion | Oligomer type | TFE-vinyl acetate copolyme r | (allyl 1,1,2,2-TFE) - (2,2,2-trifluor oethyl acrylate ) copolyme r | - | TFE-vinyl acetate copolyme r | (allyl 1,1,2,2-TFE) - (2,2,2-trifluor oethyl acrylate ) copolyme r |
| | Amount (based on the weight of the first gel polymer electrolyt e compositio n, wt%) | 2 | 2 | - | 5 | 5 |
| Second gel polymer electro lyte composi tion | Oligomer type | TFE-vinyl acetate copolyme r | TFE-vinyl acetate copolyme r | - | TFE-vinyl acetate copolyme r | (allyl 1,1,2,2-TFE)-(2,2,2-trifluor oethyl acrylate ) copolyme r |
| | Amount (based on the weight of the second gel polymer electrolyt e compositio n, wt%) | 8 | 8 | - | 5 | 5 |
| Interfacial resistance (Unit: mΩ) | | 2.51 | 2.44 | 2.40 | 2.71 | 2.52 |
| Rigidity of cell (Unit: MPa/2mm) | | 6.11 | 5.97 | 2.51 | 3.71 | 3.38 |
| Leakage amount (Unit: g) | | 0 | 0 | 15.1 | 0 | 9.6 |

Referring to Table 2, it may be confirmed that, with respect to the secondary batteries of the examples, effects of reducing interfacial resistance, improving cell rigidity, and preventing electrolyte solution leakage were simultaneously achieved in comparison to the secondary batteries of the comparative examples.

## Claims

1. A method of preparing a secondary battery, comprising steps of:
(S1) preparing a first gel polymer electrolyte composition including a first oligomer, and a second gel polymer electrolyte composition including a second oligomer;
(S2) injecting the first gel polymer electrolyte composition into a battery case, in which an electrode assembly is accommodated, to impregnate inside of the electrode assembly with the first gel polymer electrolyte composition;
(S3) injecting the second gel polymer electrolyte composition into the battery case; and
(S4) curing the first gel polymer electrolyte composition and the second gel polymer electrolyte composition which have been injected into the battery case,
wherein a content of the first oligomer in the first gel polymer electrolyte composition is less than a content of the second oligomer in the second gel polymer electrolyte composition.

2. The method of claim 1, further comprising a step of curing the first gel polymer electrolyte composition after the step (S2).

3. The method of claim 1, wherein at least one of the first gel polymer electrolyte composition and the second gel polymer electrolyte composition comprises a lithium salt.

4. The method of claim 1, wherein at least one of the first gel polymer electrolyte composition and the second gel polymer electrolyte composition comprises a polymerization initiator.

5. The method of claim 1, wherein viscosity at 25°C of the first gel polymer electrolyte composition is 6 cP or less, and
viscosity at 25°C of the second gel polymer electrolyte composition is 10 cP or more.

6. The method of claim 1, wherein, in the step (S4), the curing is performed immediately after the injecting of the second gel polymer electrolyte composition into the battery case.

7. The method of claim 1, wherein the first oligomer and the second oligomer each independently comprise at least one selected from the group consisting of a polyether-based oligomer, a polycarbonate-based oligomer, a polyacrylate-based oligomer, a polysiloxane-based oligomer, a phosphazene-based oligomer, a polyethylene-based oligomer, a urethane-based oligomer, an epoxy-based oligomer, a fluorine-based oligomer, polyethylene oxide, polyester sulfide, polyvinyl alcohol, and polyvinylidene fluoride.

8. The method of claim 1, wherein the first oligomer and the second oligomer each independently comprise at least one selected from a tetrafluoroethylene-vinyl acetate copolymer, an (allyl 1,1,2,2-tetrafluoroethyl ether)-(2,2,2-trifluoro ethyl acrylate) copolymer, a tetrafluoroethylene-(2-vinyl-1,3-dioxolane) copolymer, and a tetrafluoroethylene-vinyl methacrylate copolymer.

9. A secondary battery comprising:
an electrode assembly in which a positive electrode, a separator, and a negative electrode are alternatingly disposed;
a battery case accommodating the electrode assembly; and
an electrolyte,
wherein the electrolyte comprises a first gel polymer electrolyte disposed inside the electrode assembly and a second gel polymer electrolyte disposed outside the electrode assembly, and
interfacial resistance of the first gel polymer electrolyte is lower than interfacial resistance of the second gel polymer electrolyte.

10. The secondary battery of claim 9, wherein the interfacial resistance of the first gel polymer electrolyte is in a range of 2.0 mΩ to 2.6 mΩ.

11. The secondary battery of claim 9, wherein the interfacial resistance of the second gel polymer electrolyte is in a range of 2.6 mΩ to 3.0 mΩ.

12. The secondary battery of claim 9, wherein rigidity of the secondary battery is in a range of 5 MPa/2mm to 10 MPa/2mm.
